# EUROPEAN PATENT APPLICATION

(11) **EP 2 113 160 A1**
(43) Date of publication of application: **04.11.2009**
(21) Application number: 09159171.9
(22) Date of filing: 30.04.2009
(51) Int. Cl.: A01B 63/102, A01B 59/06

(54) **Tool suspension**

(30) Priority: 02.05.2008 DK 200800632
(71) Applicant: Kaastrup, Søren, 7870 Roslev (DK)
(72) Inventor: Kaastrup, Søren, 7870 Roslev (DK)
(74) Representative: Nielsen, Leif

(57) **Abstract**

A tool suspension (1) for a vehicle (2), preferably a tractor, including a first frame (3) for mounting the tool suspension (1) and a second frame (4) for mounting a tool (5), where the tool suspension may be lifted and lowered in a vertical plane such as seen in use, where the tool suspension (1) includes a pivot arm arrangement (6) which is pivotably mounted between the first (3) and second (4) frame for pivoting in a horizontal plane such as seen in use, that the tool suspension (1) has a first extreme position with the second frame (4) in a position at one side of the driving direction of (7) the vehicle, that the tool suspension (1) has a second extreme position with the second frame (4) in a position at the other side of the driving direction (7) of the vehicle, and that the tool suspension (1) is provided with at least one first locking means (8) that retains the tool suspension (1) in a desired position, where the pivot arm arrangement (6) includes at least one longitudinally extending arm (10), where the tool suspension (1) has an inner position at which the tool suspension (1) is shortest, where the tool suspension (1) has an outer position where the tool suspension (1) is longest, and where the tool suspension (1) is provided with at least one second locking means (11) that retains the tool suspension (1) in a desired position.

## Description

### Field of the Invention

The present invention concerns a tool suspension for a vehicle, preferably a tractor, including a first frame for mounting the tool suspension and a second frame for mounting a tool, where the tool suspension may be lifted and lowered in a vertical plane such as seen in use, where the tool suspension includes a pivot arm arrangement which is pivotably mounted between the first and second frame for pivoting in a horizontal plane such as seen in use, where the tool suspension has a first extreme position with the second frame in a position at one side of the driving direction of the vehicle, where the tool suspension has a second extreme position with the second frame in a position at the other side of the driving direction of the vehicle, and where the tool suspension is provided with at least one first locking means that retains the tool suspension in a desired position.

### Background of the Invention

When cultivating areas of soil, the farmers want a certain texture of the soil, where the uppermost part of the soil is worked at a depth of about five centimetres, whereas the soil layers under the worked soil layer are to be firm. This has appeared to provide the best seedbed for the crops chosen and the greatest yield afterwards.

The common procedure by cultivating a field is as follows:
a) The soil is ploughed at a depth up to 25 cm;
b) the soil is compacted by a soil compacter or a roller;
c) the soil is harrowed for sowing;
d) a chosen crop is sown; and
e) the soil is compacted around the seeds with a soil compacter or roller.

The disadvantage of this procedure for cultivating a field is that the farmer has to drive over the field at least once for each of the above soil preparation types, which is expensive and time-consuming.

As a solution to this, agricultural machine producers make combination machines where two or more of the above soil preparation types are performed in one and the same round over the field.

The ideal would be to perform all five soil preparation types at once, but this will require a large and long combination machine, something which hitherto has been impossible.

For example, a plough has been made, provided with a soil compacter which is drawn behind the plough. a-b are thus combined in one operation.

Another example of combination machine is a harrowing/sowing/rolling machine where the above soil preparation type c-e is performed in one operation.

Both examples are drawn behind a vehicle, e.g. a tractor.

The drawback of the first example is that the machine is difficult to manoeuvre on fields which are small or with corners, as it is only possible to back with this type of combination machine with difficulty.

DE 29800137 U1 discloses a tool suspension for a tractor where the tool suspension includes a pivot arm arrangement which is pivotably mounted between the tractor and the tool suspended on the tool suspension. The tool may thus be pivoted between a first and a second extreme position on one and the other side, respectively, of the driving direction of the tractor. A drawback of DE 29800137 U1 is that the distance between the vehicle and the tool is fixed, and that the angle of the tool relative to the driving direction is changed during pivoting such that the tool may only work in the extreme positions.

EP 1266551 A2 discloses a tool suspension for a tractor where the tool suspension includes a pivot arm arrangement which is pivotably mounted between the tractor and the tool suspended on the tool suspension. The tool may thus be pivoted between a first and a second extreme position on one side of and behind the tractor, respectively.

A drawback of EP 1266551 is that it is not suited in connection with soil working alternatingly on one and the other side, respectively, of the tractor, as it is e.g. required in connection with use of a soil compacter in front of the tractor and a two-way plough behind the tractor.

### Object of the Invention

It is the object of the invention to indicate a tool suspension for mounting on a vehicle. On the tool suspension is to be mounted a tool which can be disposed in a lateral position to the right or to the left of a vehicle such that the vehicle does not influence the area which is worked.

### Description of the Invention

According to the present invention, this is achieved by a tool suspension of the type mentioned in the introduction which is peculiar in that the pivot arm arrangement includes at least one longitudinally extending arm, that the tool suspension has an inner position at which the tool suspension is shortest, that the tool suspension has an outer position where the tool suspension is longest, and that the tool suspension is provided with at least one second locking means that retains the tool suspension in a desired position.

Hereby is achieved that a plot can be worked alternately at the right and the left sides of the vehicle such that the vehicle does not touch the plot subsequently or in beforehand, respectively. Additionally, the tool can be retained in the desired position.

Moreover, it is achieved that the distance of tool to the vehicle can be adjusted and kept fixed. It is advantageous that the tool suspension is as short as possible when the vehicle e.g. is driving on public roads between two work places. When the tool suspension is as short as possible, the lateral distance to the vehicle in the extreme positions of the first pivot arm arrangement will not be sufficient to bring the tool to a distance where the vehicle does not influence the worked area, why it is advantageous to be able to displace the first pivot arm arrangement longitudinally.

Typically, the first frame will be designed with a triple suspension for mounting on the vehicle which by and large is the standard for agricultural tools. Besides, the tool suspension will typically be designed so that a certain rotation about a longitudinal axis in parallel with the driving direction is possible for the tool suspension in relation to the vehicle and for the tool in relation to the tool suspension.

This is particularly an advantage in connection with ploughing where the wheels on one side of the vehicle run in a furrow, thereby imparting a skew position to the vehicle in relation to horizontal, . Besides, variations in the ground will cause the position of the tool to vary in relation to horizontal.

A practical example of using the invention could be that the tool suspension is mounted in front of the vehicle with a combination tool consisting of a two-way plough and a soil compacter, and that a second combination tool consisting of a harrow, a sowing machine and a soil compacter are mounted behind the vehicle. Hereby it is possible to perform all the procedures of cultivating a field in one and the same operation.

Another practical example of applying the invention could be to mount the tool suspension in front of the vehicle with a soil compacter and that a two-way plough is mounted behind the vehicle. A two-way plough is provided with shares such that side-laid furrows can be ploughed from both direction, as opposed to a conventional plough by which it is necessary to drive in the same direction all the time for ploughing side-laid furrows. The vehicle with a two-way plough will then have the worked plot alternately on the right and the left sides. The invention enables easy moving of the soil compacter from one side of the vehicle to the other when the vehicle changes direction at the end of a furrow.

According to a further embodiment, the tool suspension according to the invention is peculiar in that the first frame and the second frame are connected by a parallelogram, and that the angle of the second frame in a horizontal plane and relative to the driving direction of the vehicle, as seen in use, is largely constant in all positions of the tool suspension between the two extreme positions.

Hereby is achieved that the tool is always oriented in the same direction relative to the driving direction, irrespective of the position of the pivoting arrangement.

If the pivot arm arrangement consists of a single arm, the parallelogram may be established by two bars between the frames, or by two pre-tensioned wires.

In a particularly advantageous embodiment, the pivot arm arrangement consists of two parallel arms which thus form a parallelogram retaining the other frame at a fixed angle relative to the driving direction.

According to a further embodiment, the tool suspension according to the invention is peculiar in that it is mounted such that the second frame is in front of the first frame relative to the driving direction of the vehicle for forward driving.

According to a further embodiment, the tool suspension according to the invention is peculiar in that it is mounted such that the first frame is in front of the second frame relative to the driving direction of the vehicle for forward driving.

By the two above embodiments is achieved that tools can be disposed in front of and behind the vehicle. This is advantageous where it is desired that a tool is to work an area at one and the other side of a vehicle, respectively, and where the changing between the sides is to be performed easily.

The same vehicle may additionally be fitted with two tool suspensions at the same time - one in front of and one behind the vehicle. This provides great flexibility in the working of the soil.

According to a further embodiment, the tool suspension according to the invention is peculiar in that the pivot arm arrangement is provided with at least one first actuator for pivoting the tool suspension, and that the at least one first actuator is chosen optionally among pneumatic, electromechanical or hydraulic actuators.

Hereby is achieved that pivoting the tool suspension from one side to the other can be performed from a remote position, e.g. by the driver of the vehicle without leaving his seat.

According to a further embodiment, the tool suspension according to the invention is peculiar in that the at least one actuator includes the at least one locking means.

By integrating the locking means in the actuator, it is similarly possible to operate the locking means from a remote position such that the driver does not have to leave the vehicle in order to operate the locking means.

By pneumatic and hydraulic actuators, the locking means will typically be part of the valve system, and by electro-mechanical actuators, the locking means will typically be part of the electric system where the actuator is short-circuited, for example, or the actuator comprises a worm gear selected with a pitch so as to be self-locking.

According to a further embodiment, the tool suspension according to the invention is peculiar in that the at least one longitudinally extending arm is provided with at least one second actuator for displacement, and that the at least one second actuator is chosen optionally among pneumatic, electromechanical or hydraulic actuators.

Hereby is achieved that pivoting the tool suspension from the innermost to the outermost position can be performed from a remote position, e.g. by the driver of the vehicle without leaving his seat.

According to a further embodiment, the tool suspension according to the invention is peculiar in that the at least one second actuator includes the at least one second locking means.

In an alternative embodiment, the tool suspension is provided with a mechanical locking arrangement that locks the pivot arm arrangement in a centre position and mechanical locking arrangement that locks the longitudinal displacement of the pivot arm arrangement.

Hereby is achieved that the tool suspension is locked in a transport position where the different moving parts are locked such that they cannot move. The tool suspension may hereby be transported on public roads in a safe way while mounted on the vehicle.

### Description of the Drawing

The invention will be explained in more detail below with reference to the accompanying drawing, wherein:
- Fig. 1: shows an isometric view of a first embodiment;
- Fig. 2: shows a plan view of a first embodiment;
- Fig. 3: shows a plan view of a second embodiment;
- Fig. 4: shows a side view of the lifting/lowering arrangement;
- Fig. 5: shows an isometric view of a third embodiment;
- Fig. 6: shows a side view from the front of a third embodiment with the tool in an extreme position in lifted position;
- Fig. 7: shows a side view from the front of a third embodiment with the tool in an extreme position in lowered position;
- Fig. 8: shows a side view from the front of a third embodiment with the tool and the vehicle in working position;
- Fig. 9: shows a plan view from the top of a third embodiment with the tool in transport position;
- Fig. 10: shows a plan view of a third embodiment with the tool in extreme position and the longitudinally displaceable arms in an inner position;
- Fig. 11: shows a plan view of a third embodiment with the tool in extreme position and the longitudinally displaceable arms in an outer position;
- Fig. 12: shows a plan view of a fourth embodiment;
- Fig. 13: shows a plan view of a fourth embodiment with the tool suspension in an outer position and the longitudinally displaceable arms in an inner position;
- Fig. 14: shows a plan view of a fourth embodiment with the tool suspension in an outer position and the longitudinally displaceable arms in an outer position;
- Fig. 15: shows an isometric view of a fourth embodiment;
- Fig. 16: shows a first photo of a situation of use of the tool suspension;
- Fig. 17: shows a second photo of a situation of use of the tool suspension;
- Fig. 18: shows a third photo of a situation of use of the tool suspension;
- Fig. 19: shows a fourth photo of a situation of use of the tool suspension; and
- Fig. 20: shows a fifth photo of a situation of use of the tool suspension.

In the explanation of the Figures, identical or corresponding elements will be provided with the same designations in different Figures. Therefore, no explanation of all details will be given in connection with each single Figure/embodiment.

### Detailed Description of the Invention

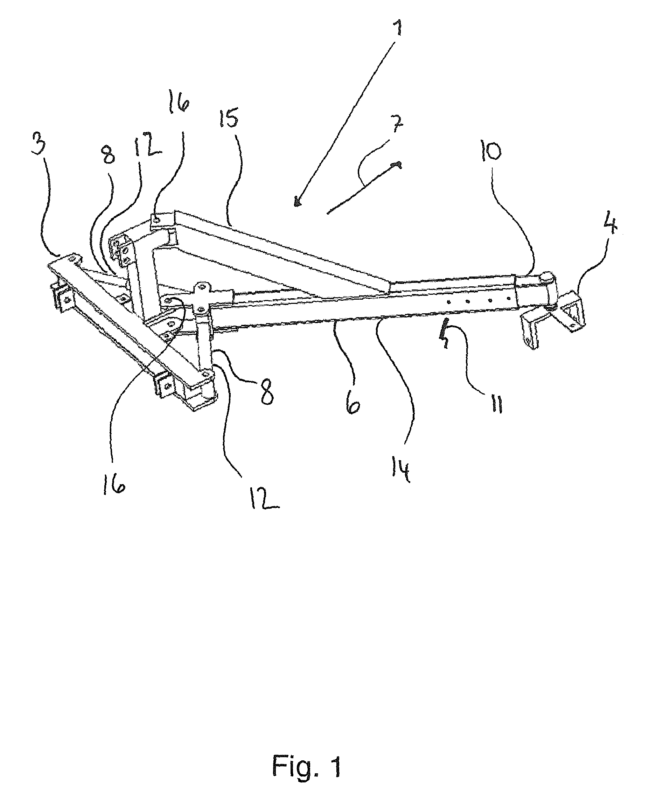

Figs. 1-2 show a first embodiment of the tool suspension 1. The tool suspension 1 includes a first frame 3 adapted for mounting on a vehicle 2 (not shown). In the shown embodiment, the frame 3 is designed with triple suspension. Correspondingly, the vehicle 2 (not shown) is provided with an interacting triple suspension for mounting the tool suspension 1. This is a standard mounting method for agricultural tools.

A pivot arm arrangement 6 is pivotably connected to the first frame 3. The pivot arm arrangement 6 includes a first arm 14 which at one end is pivotably fastened to the first frame 3 and which at its other end is pivotably fastened to the other frame 4. The second frame 4 is adapted for mounting a tool 5 (not shown). The pivot arm arrangement 6 includes a second arm 15 which at one end is pivotably fastened to the first frame 3 and which at its other end is fastened to the first arm 14.

The pivot arm arrangement 6 may pivot in a horizontal plane about a vertical axis through the pivoting connection 16 to the first frame 3. In the shown embodiment, the pivot arrangement 6 is provided with two combined first actuators 12 and first locking means 8. This first actuator 12 enables automatic and remote pivoting of the pivot arrangement 6.

The first arm 14 is provided with a longitudinally displaceable arm 10 such that the tool suspension 1 can be made longer or shorter, respectively. The longitudinal displacement of the pivot arm arrangement 6 is performed manually in the shown embodiment. The first arm 14 and the longitudinally displaceable arm 10 are provided with an interacting mechanical locking means 11 preventing displacement during use. In the shown case, the mechanical locking means 11 is a split-pin interacting with holes in the first arm 14 and the longitudinally displaceable arm 10.

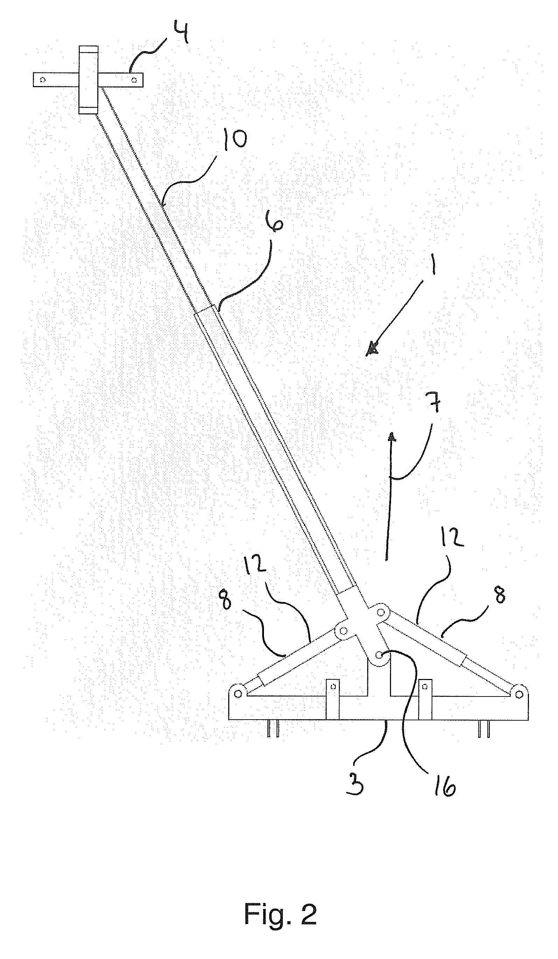

Fig. 1 shows the tool suspension 1 in a position at one side of the driving direction 7 of the vehicle with the longitudinally displaceable arm 10 in an innermost position. Fig. 2 shows the tool suspension 1 in a position at the other side of the driving direction 7 of the vehicle with the longitudinally displaceable arm 10 in an outermost position.

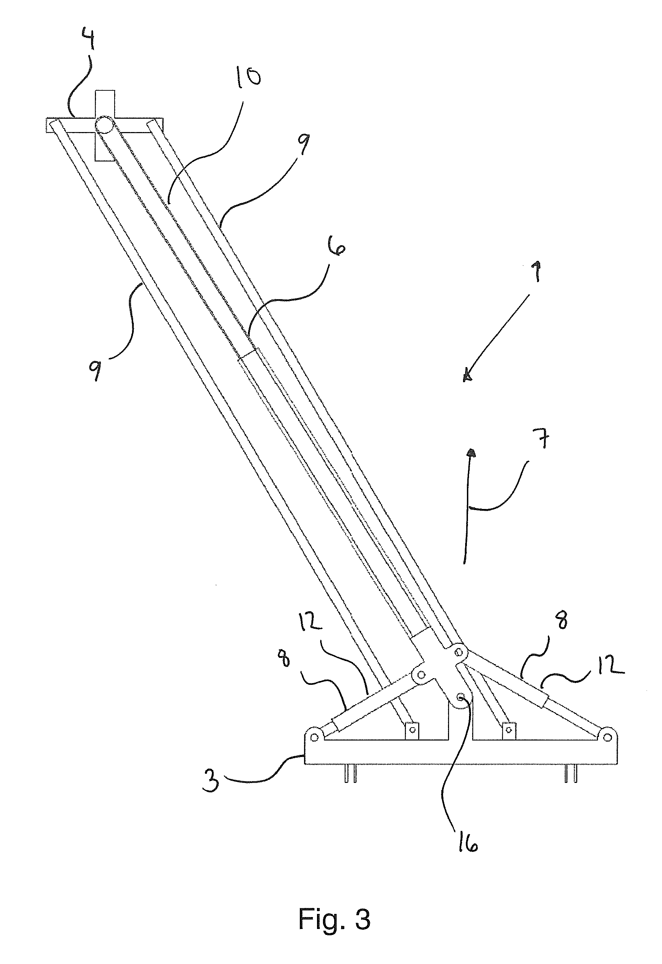

Fig. 3 shows an embodiment of the tool suspension 1 where it is provided with a parallelogram 9 to ensure that the second frame 4 has an unchanged angle in relation to the driving direction from one to the other extreme position.

The parallelogram 9 may be established by fixed connections in the form of bars or arms or flexible connections in the form of pre-tensioned wires.

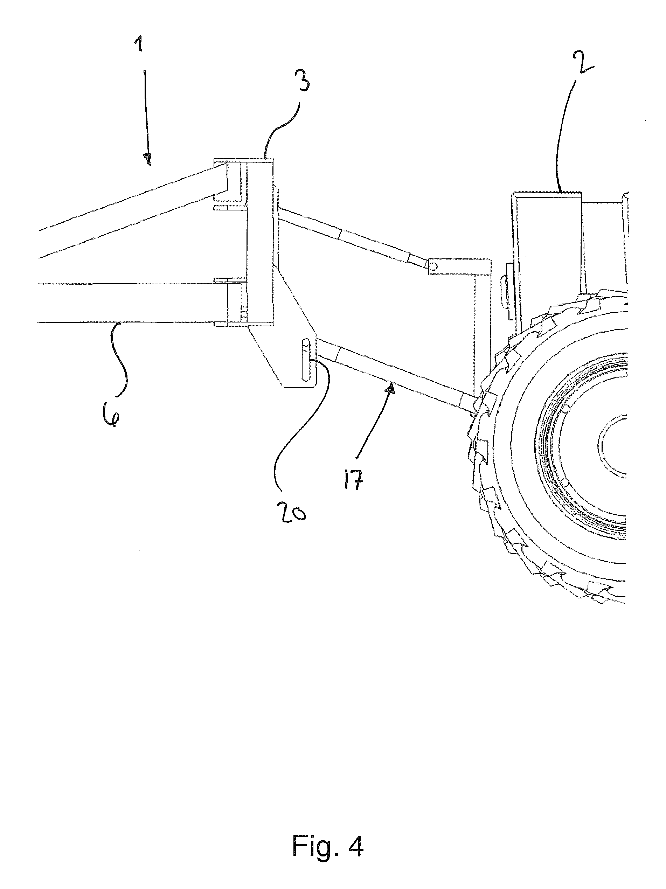

Fig. 4 shows how the tool suspension 1 is mounted in front of a vehicle 2. The lift system 17 of the vehicle which is connected with the first frame 3 may be elevated or lowered such that the tool suspension 1 attains the desired height relative to a base.

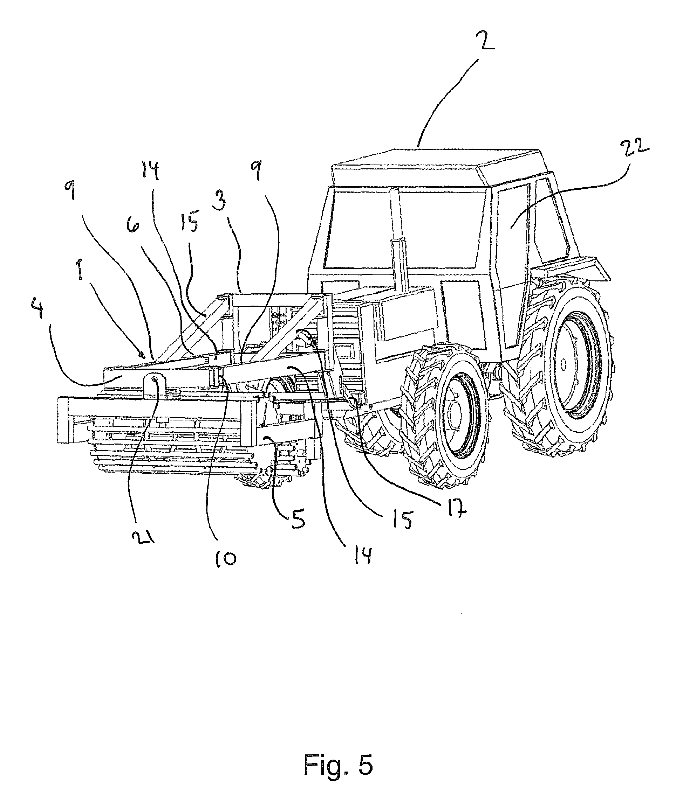

Figs. 5 to 11 show a third embodiment of the tool suspension 1 which is mounted in front of the vehicle 2. The arms 10, 14, 15 of the pivot arm arrangement are doubled such that they constitute each leg in the parallelogram 9. This provides a strong structure which is also stable and combines two functions: carry the tool 5 and retain the angle of the tool in relation to the driving direction 7.

The pivot arm arrangement 6 is provided with two first actuators 12, each with a first locking means 8. The first actuators 12 are hydraulic and pressurised by the hydraulic system of the vehicle. The locking means 8 are hydraulic valves.

The longitudinally displaceable arms 10 are provided with two second actuators 13, each with a second locking means 11. The two second actuators 13 are hydraulic and pressurised by the hydraulic system of the vehicle. The locking means 11 are hydraulic valves.

The various positions of the tool suspension are remotely controlled from the vehicle cab 22.

The hydraulic actuators 12, 13 are provided with stop valves at their extreme positions.

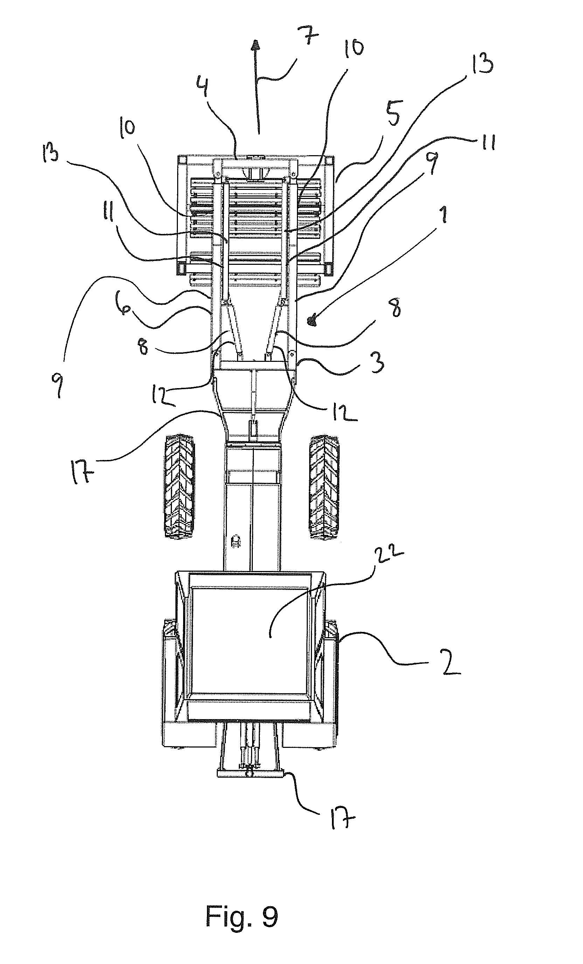

Figs. 5 and 9 show the tool suspension 1 centrally positioned in front of the vehicle 2 in an elevated position with the longitudinally displaceable arms 10 in an innermost position. This setting is typically used when the tool 5 is not operating and during transport to and from the field. The tool suspension 1 will typically be mechanically locked to ensure against inadvertent movements and deflections while driving, which occurs at higher speed than when the tool 5 is in operation.

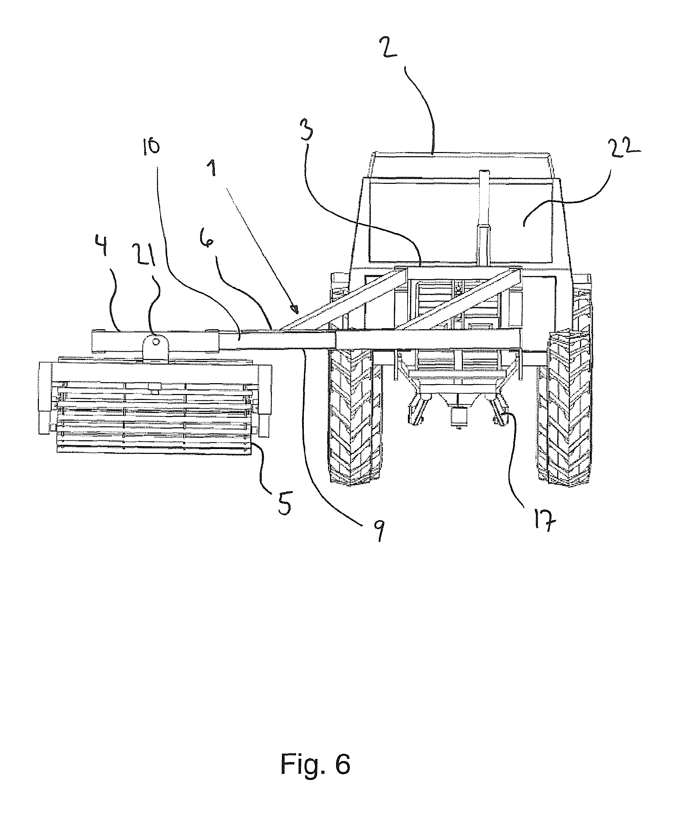

Figs. 6 shows the tool suspension 1 in a position in front of the vehicle 2 in an elevated position with the longitudinally displaceable arms 10 in an outermost position. This setting will typically be used immediately before or after operating the tool 5. The tool suspension 1 provides the tool 5 with a lateral distance from the vehicle 2 such that it does not influence the worked piece of the field.

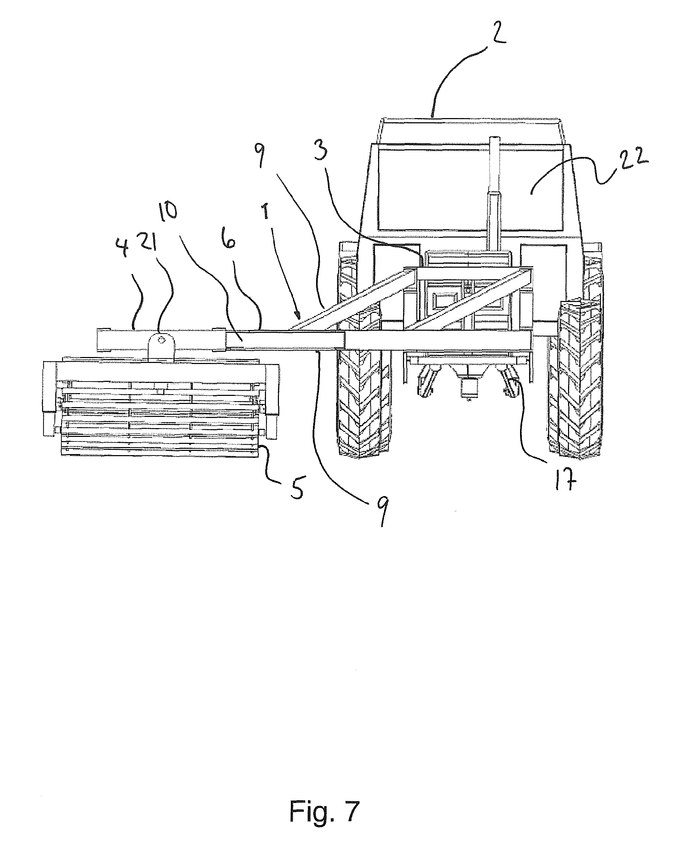

Figs. 7 shows the tool suspension 1 in a position in front of the vehicle 2 in a lowered position with the longitudinally displaceable arms 10 in an outermost position. This setting is used when the tool 5 is operating. The tool suspension 1 provides the tool 5 with a lateral spacing from the vehicle 2 such that it does not influence the worked piece of the field.

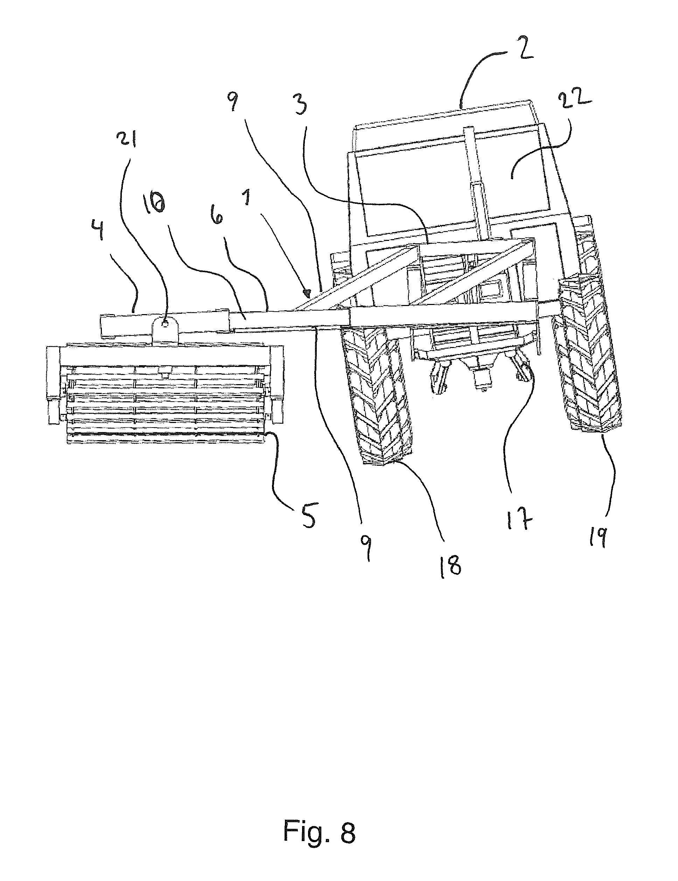

Fig. 8 shows a particular situation where the tool suspension 1 is in a working position. The vehicle 2 is provided with plough (not shown) on its rearmost lift 17. The right wheel pair 18 of the vehicle as seen in relation to the driving direction runs in the bottom of a furrow, while the left wheel pair 19 runs on the still unworked soil. This imparts a rotation to the vehicle about a longitudinal axis through the vehicle.

The first frame 3 is provided with slots 20 (se Fig. 4) for counteracting this which otherwise would prevent the right wheel pair 18 of the vehicle from being supported during driving.

The tool 5 is provided with a hinge 21 that enables rotation of the tool 5 about an axis through the hinge 21 and in parallel with the driving direction 7 in order to counter variations in the ground.

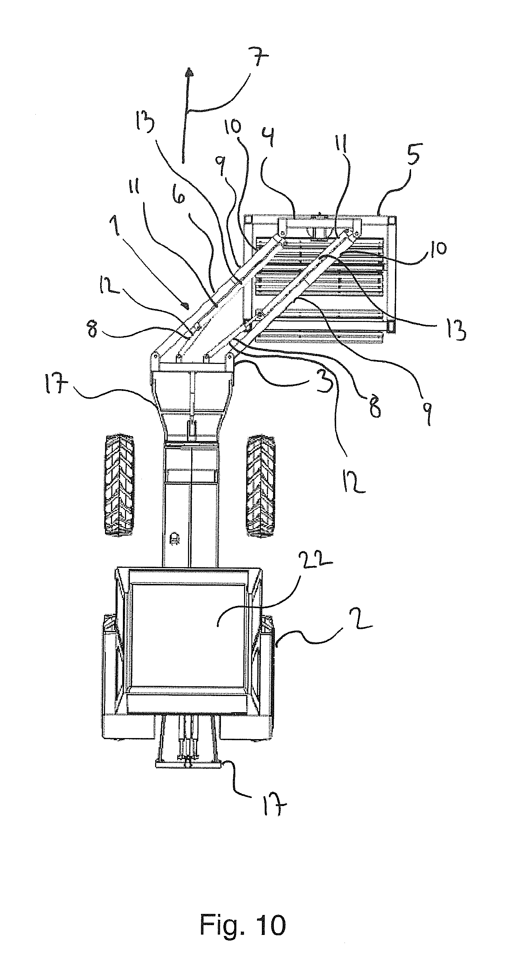

Fig. 10 shows the tool suspension 1 where displacement of the longitudinally displaceable arms 10 are on the way to their extreme position. In this position, the tool 5 will operate so close to the vehicle 2 in lateral direction so that the vehicle 2 will influence the piece of soil worked by the tool 5.

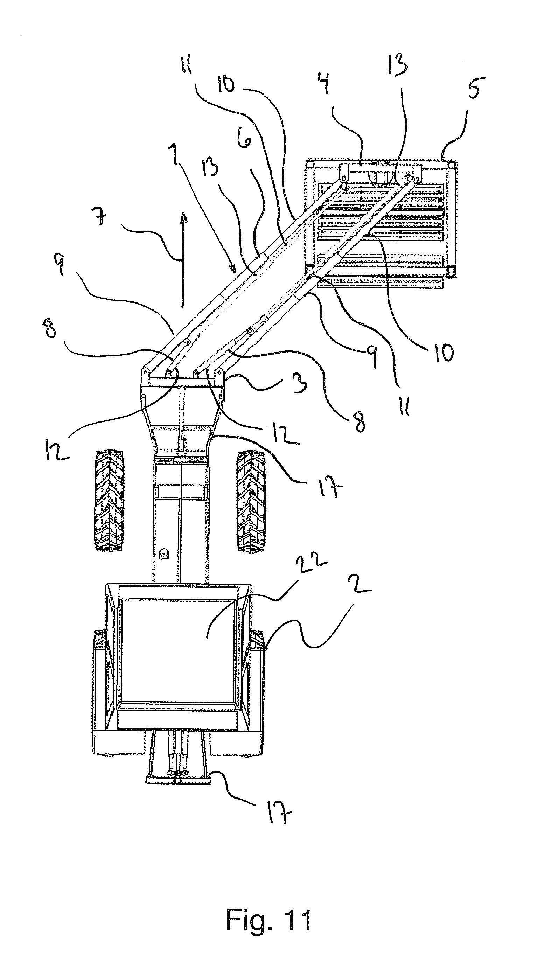

Fig. 11 shows the tool suspension 1 where the longitudinally displaceable arms 10 are in their extreme position. In this position, the tool 5 will work so far from the vehicle 2 in lateral direction so that the vehicle 2 will not influence the piece of soil worked by the tool 5.

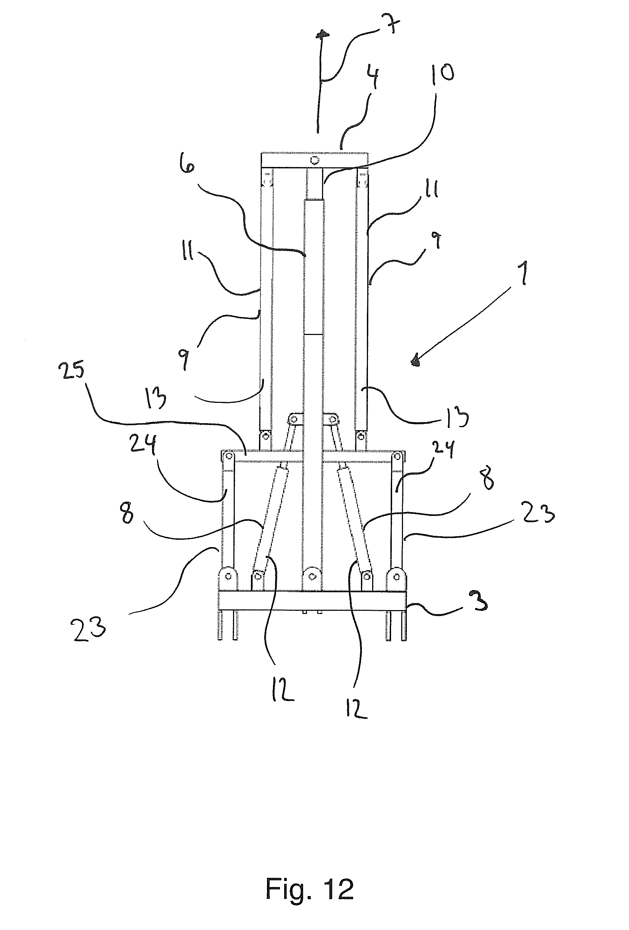

Figs. 12-15 show a fourth embodiment of the tool suspension 1. In order to limit the length of the other actuators 13 for displacing the longitudinally displaceable arm 10, an additional parallelogram 23 is inserted. This parallelogram consists of fixed bars 24 which are pivotably connected with the first frame 3 and an intermediate frame 25. The parallelogram 9 is constituted by the two other actuators 13 for the longitudinally displaceable arm 10.

Fig. 12 shows the tool suspension 1 centrally disposed with the longitudinally displaceable arms 10 in an innermost position. This setting is typically used when the tool 5 is not operating and during transport to and from the field.

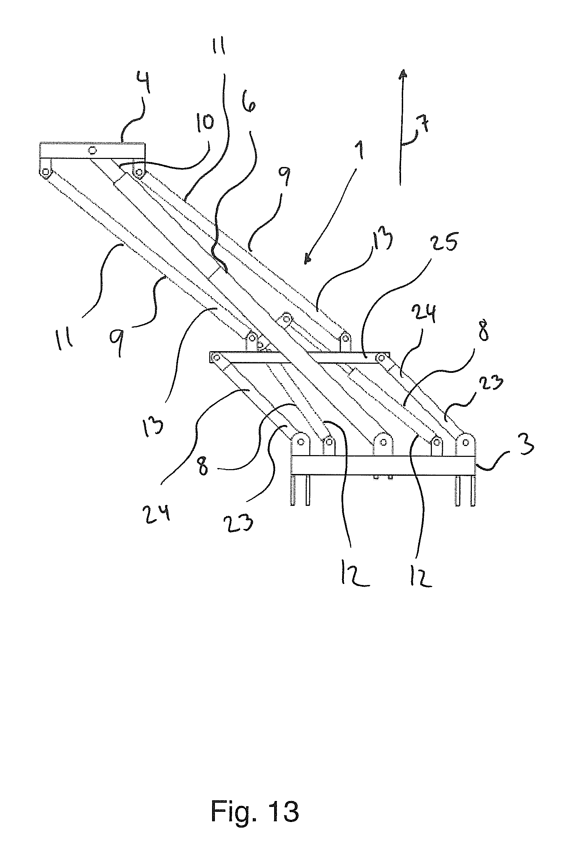

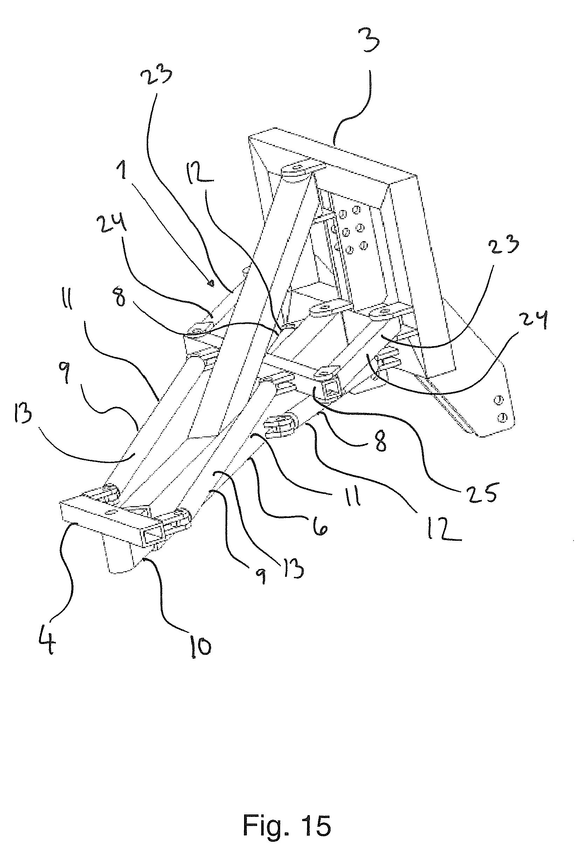

Figs. 13 and 15 show the tool suspension 1 in a position where the pivot arm arrangement 6 is in an outer position, and where the displacement of the longitudinally displaceable arms 10 is not commenced. It appears how the additional parallelogram 23 ensures that the second frame 4 has a constant angle in relation to the driving direction 7.

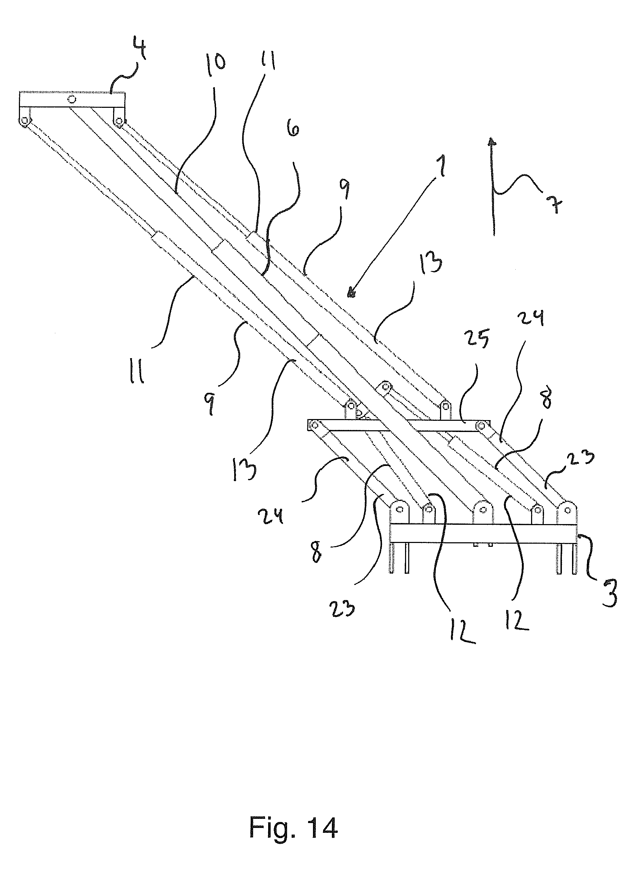

Fig. 14 shows the tool suspension 1 in a position where the pivot arm arrangement 6 is in an outer position, and where the longitudinally displaceable arms 10 are in an extreme position under the action of the second actuators 13. It appears how the additional parallelogram 23 ensures that the second frame 4 has a constant angle in relation to the driving direction 7. It is important that the second actuators 13 have identical displacement.

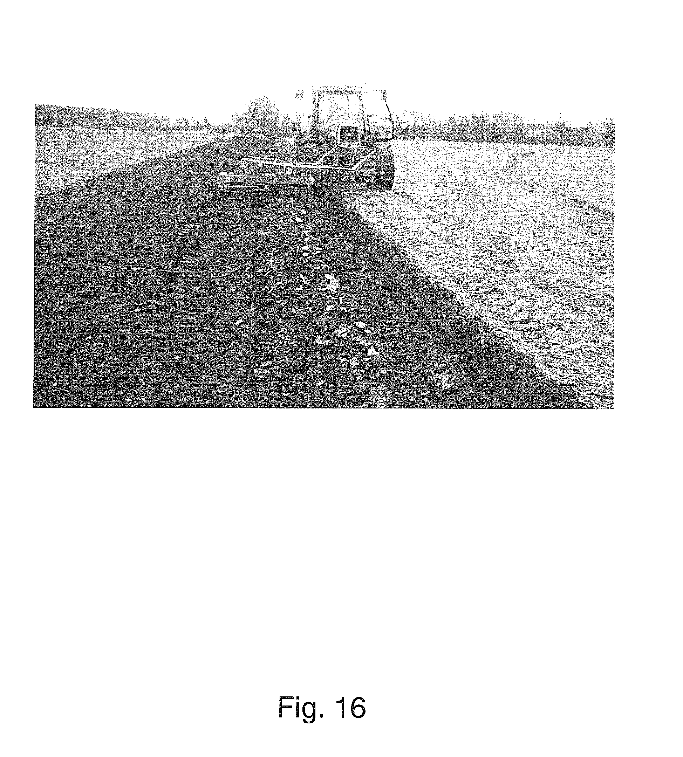

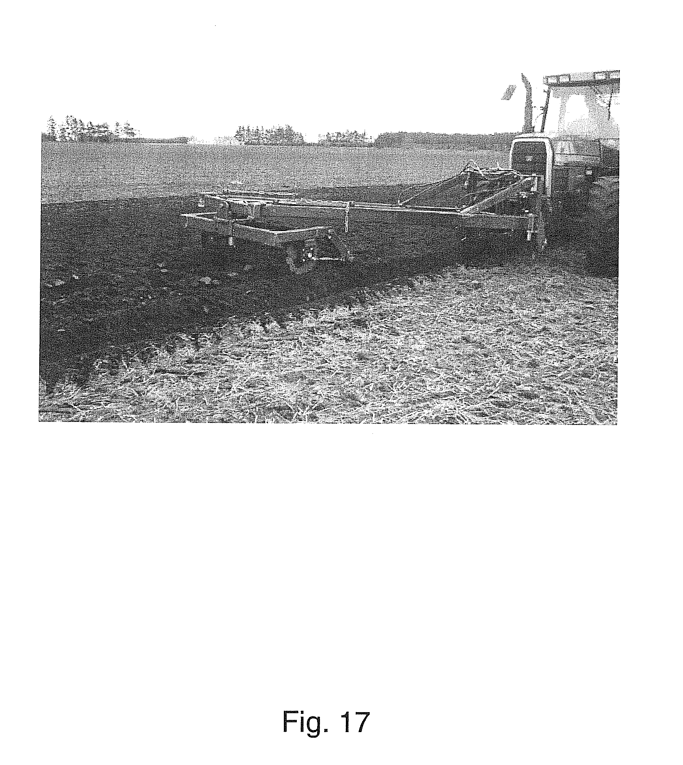

Figs. 16-20 show photos of situations of use of the tool suspension. The tool suspension is disposed in front of the vehicle and fitted with a soil compacter. A plough is mounted at the rear lift of the vehicle.

Figs. 16-17 show ploughing with the worked piece of soil at the right side of the vehicle in relation to forward driving. The tool suspension is in a position to the right of the vehicle.

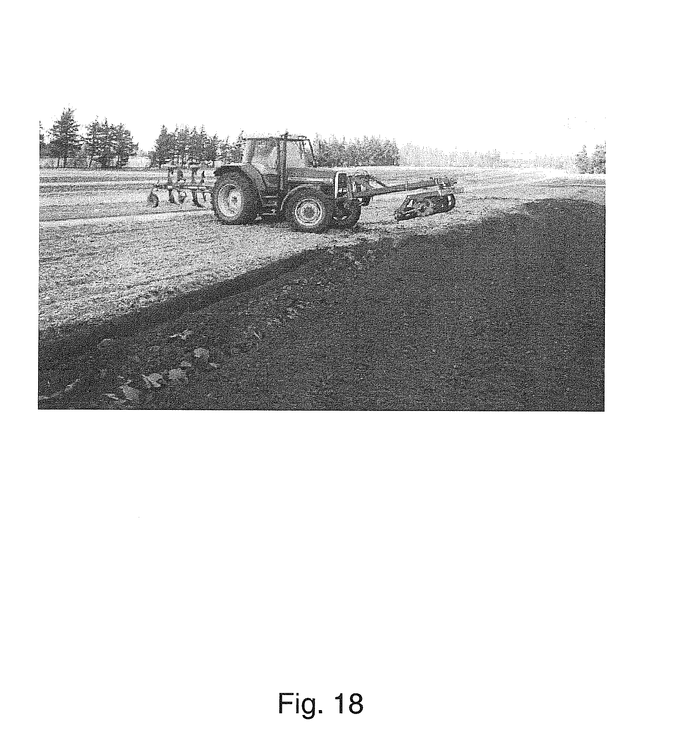

Fig. 18 shows how plough and soil compacter are elevated when the vehicle has to turn and continue ploughing in the opposite direction. The picture shows how easy it is to manoeuvre with the two tools, both during forward and backward driving.

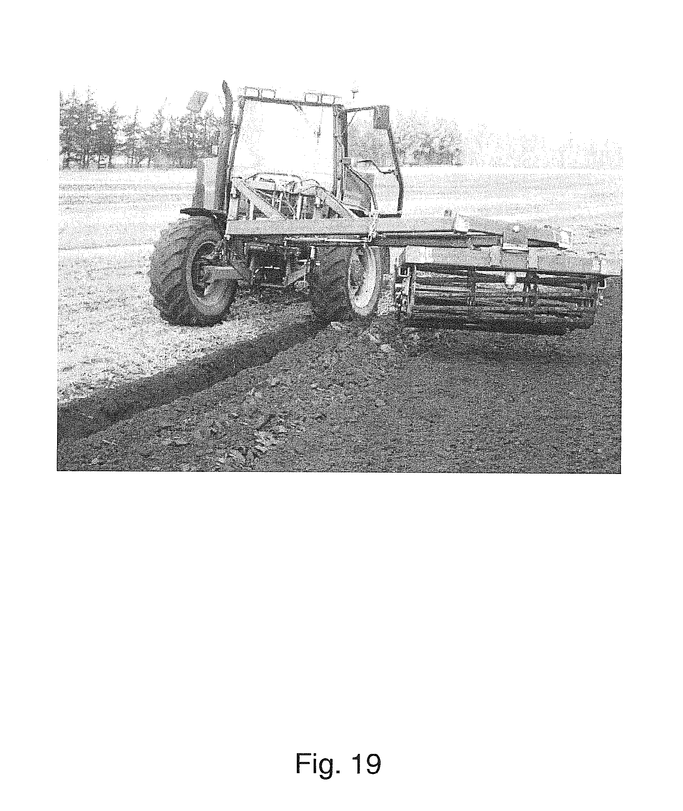

Fig. 19 shows the vehicle with tool suspension shortly before commencing ploughing in opposite direction of Figs. 15-16. The tool suspension is moved to a position to the left of the vehicle in relation to driving forwards. The tool suspension is still elevated.

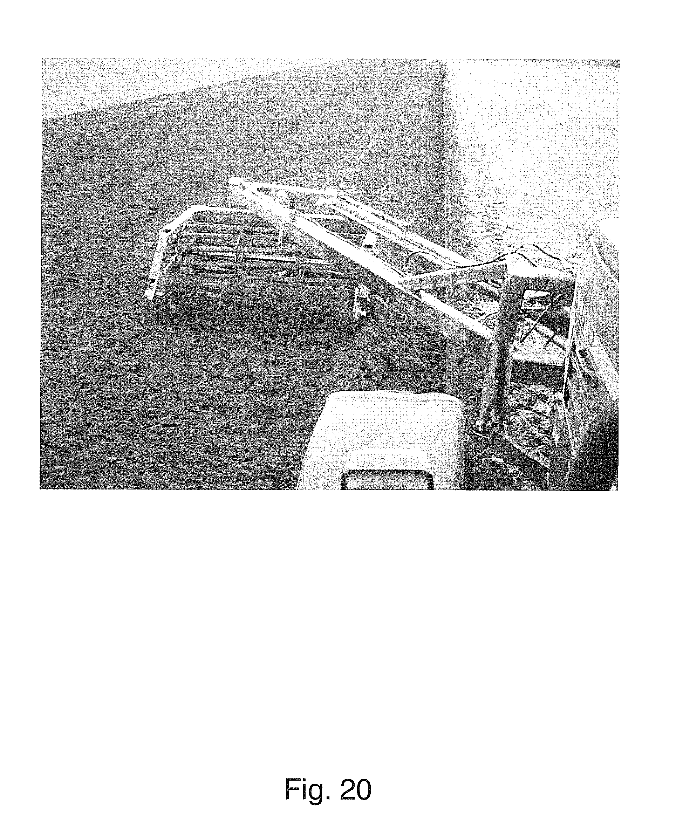

Fig. 20 shows ploughing with the worked piece of soil to the right of the vehicle. The tool suspension is in a position to the left of the vehicle relative to forward driving. The longitudinally displaceable arms are in an extreme position. The vehicle does not influence the soil area worked by the plough and the soil compacter.

The tool suspension 1 is only illustrated in a position in front of the vehicle 2, however, it is possible to use the tool suspension in a corresponding way behind the vehicle.

Even if the vehicle 2 on Figs. 5-11 is only shown without tool on the rearmost lift 17, it is implied that the latter may also be occupied by a tool chosen in accordance with the desired working of the soil.

On the described Figures, the tool 5 is presented as a soil compacter, but use of the tool suspension 1 is not limited to this tool only. The tool 5 may e.g. be a combination tool, a plough, a harrow, a roller, a groom, a field sprayer, a sowing machine, a fertiliser applicator or other tools suited for the desired working procedure.

In the light of the disclosed idea, the skilled in the art may readily compose a hydraulic, pneumatic or electric system with associated components that support the mechanical system and functions of the tool suspension.

## Claims

1. A tool suspension (1) for a vehicle (2), preferably a tractor, including a first frame (3) for mounting the tool suspension (1) and a second frame (4) for mounting a tool (5), where the tool suspension may be lifted and lowered in a vertical plane such as seen in use, where the tool suspension (1) includes a pivot arm arrangement (6) which is pivotably mounted between the first (3) and second (4) frame for pivoting in a horizontal plane such as seen in use, where the tool suspension (1) has a first extreme position with the second frame (4) in a position at one side of the driving direction of (7) the vehicle, where the tool suspension (1) has a second extreme position with the second frame (4) in a position at the other side of the driving direction (7) of the vehicle, and where the tool suspension (1) is provided with at least one first locking means (8) that retains the tool suspension (1) in a desired position, **characterised in that** the pivot arm arrangement (6) includes at least one longitudinally extending arm (10), that the tool suspension (1) has an inner position at which the tool suspension (1) is shortest, that the tool suspension (1) has an outer position where the tool suspension (1) is longest, and that the tool suspension (1) is provided with at least one second locking means (11) that retains the tool suspension (1) in a desired position.

2. Tool suspension (1) according to claim 1, **characterised in that** the first frame (3) and the second frame (4) are connected by a parallelogram (9), and that the angle of the second frame (4) in a horizontal plane and relative to the driving direction (7) of the vehicle, as seen in use, is largely constant in all positions of the tool suspension between the two extreme positions.

3. Tool suspension (1) according to claim 1-2, **characterised in that** it is mounted such that the second frame (4) is in front of the first frame (3) relative to the driving direction of the vehicle for forward driving (7).

4. Tool suspension (1) according to claim 1-3, **characterised in that** it is mounted such that the first frame (3) is in front of the second frame (4) relative to the driving direction of the vehicle for forward driving (7).

5. Tool suspension (1) according to claim 1-4, **characterised in that** the pivot arm arrangement (6) is provided with at least one first actuator (12) for pivoting the tool suspension (1), and that the at least one first actuator (12) is chosen optionally among pneumatic, electromechanical or hydraulic actuators.

6. Tool suspension according to claim 5, **characterised in that** the at least one first actuator (12) includes the at least one first locking means (8).

7. Tool suspension according to claim 1-6, **characterised in that** the at least one longitudinally extending arm (10) is provided with at least one second actuator (13) for displacement, and that the at least one second actuator (13) is chosen optionally among pneumatic, electromechanical or hydraulic actuators.

8. Tool suspension according to claim 7, **characterised in that** the at least one second actuator (13) includes the at least one second locking means (11).
